## Europäisches Patentamt
## European Patent Office
## Office européen des brevets

(11) Veröffentlichungsnummer: **0 245 604**
**A2**

# (12) EUROPÄISCHE PATENTANMELDUNG

(21) Anmeldenummer: **87103571.3**

(22) Anmeldetag: **12.03.87**

(51) Int. Cl.³: **B 23 B 51/06**

(30) Priorität: **12.05.86 DE 3615940**

(43) Veröffentlichungstag der Anmeldung:
**19.11.87 Patentblatt 87/47**

(84) Benannte Vertragsstaaten:
**CH DE ES FR GB IT LI SE**

(71) Anmelder: **Firma Gottlieb Gühring**
**Herderstrasse 50-54**
**D-7470 Albstadt 1-Ebingen(DE)**

(72) Erfinder: **Reinauer, Josef**
**Weidenweg 23**
**D-7480 Sigmaringen 3(DE)**

(74) Vertreter: **Winter, Konrad Theodor, Dipl.-Ing. et al,**
**Patentanwaltsbüro Tiedtke- Bühling- Kinne- Grupe-**
**Pellmann- Grams- Struif- Winter- Roth Bavariaring 4**
**D-8000 München 2(DE)**

(54) Verfahren zum Einbringen tiefer Löcher in ein Werkstück.

(57) Zum Einbringen tiefer Löcher in ein Werkstück wird ein Bohrwerkzeug im Bereich der Bohrlochsohle mit einem unter einem vorgegebenen Betriebskühlmitteldruck stehenden Kühlmittel versorgt; als Bohrwerkzeug wird ein Spiralbohrer mit einem Hartmetall-Schneidteil mit innenliegenden Kühlkanälen verwendet; der Betriebskühlmitteldruck wird in Abhängigkeit von der Bohrlochtiefe derart gesteuert, daß er oberhalb von 50 bar bleibt.

Fig. 26

HEDIKE BÜHLING - KINNE - GRUPE
**P**ELLMANN - **G**RAMS - **S**TRUIF

Vertreter beim EPA
Dipl.-Ing. H. Tiedtke
Dipl.-Chem. G. Bühling
Dipl.-Ing. R. Kinne
Dipl.-Ing. P. Grupe
Dipl.-Ing. B. Pellmann
Dipl.-Ing. K. Grams
Dipl.-Chem. Dr. B. Struif

Bavariaring 4, Postfach 20 24 03
8000 München 2
Tel.: 089-53 96 53
Telex: 5-24 845 tipat
Telecopier: 0 89-53 73 77
cable: Germaniapatent München

0245604

12. März 1987
EP 6579

Firma Gottlieb Gühring
7470 Albstadt 1 - Ebingen, BRD

# Verfahren zum Einbringen tiefer Löcher in ein Werkstück

Die Erfindung bezieht sich auf ein Verfahren zum Einbringen tiefer Löcher in ein Werkstück nach dem Oberbegriff des Patentanspruchs 1.

Hierfür wurden bisher vorzugsweise Einlippenbohrwerkzeuge oder ähnliche Bohrwerkzeuge angewendet. Infolge der Ausbildung und Anordnung der Schneiden dieser Bohrwerkzeuge tritt zwangsläufig eine asymmetrische Belastung des Bohrwerkzeugs auf. Dadurch ergibt sich eine vergleichsweise geringe Standzeit, was zur häufigen Umrüstung der eingesetzten Bohrmaschinen führt. Zum anderen ist infolge der asymmetrischen Belastung eine exakte Rundheit und Ausrichtung der Bohrung nur mit aufwendigen Sondermaßnahmen mögliche, z. B. durch Anwendung einer Hülse.

Des weiteren sind die erzielbaren Vorschubgeschwindigkeiten bei diesen Bohrwerkzeugen verhältnismäßig gering, was ebenfalls auf die ungleichförmigen Belastungsverhältnisse im Schneidenbereich zurückgeht.

Dresdner Bank (München) Kto. 3935 844
(BLZ 700 800 00)          H/15

Deutsche Bank (München) Kto. 286 1060
(BLZ 700 700 10)

Postscheckamt (München) Kto. 670-43-804
(BLZ 700 100 80)

Der Erfindung liegt die Aufgabe zugrunde, das gattungsgemäße Verfahren zum Einbringen tiefer Löcher derart weiterzubilden, daß bei Erhöhung der Lage- und der Passungsgenauigkeit sowie der Rundheit der zu erstellenden Bohrungen gleichzeitig die Vorschubgeschwindigkeit des Bohrwerkzeugs erhöht werden kann.

Diese Aufgabe wird erfindungsgemäß durch ein Verfahren mit den Merkmalen im kennzeichnenden Teil des Patentanspruchs 1 gelöst. Die Anwendung eines extrem belastbaren Spiralbohrers in Verbindung mit der Steuerung des Fluiddrucks in dem Hochdruckbereich ermöglicht Vorschubgeschwindigkeiten, die um den Faktor 8 bis 10 über den mit Einlippenbohrern bislang erzielbaren Werten liegen. Da die Spiralbohrerspitze über mehrere Schneiden verfügen kann, ist eine symmetrische Belastung des Bohrwerkzeugs möglich. Die Anwendung von Hartmetall als Werkstoff für das Schneidteil erhöht die Stabilität des Bohrwerkzeugs und damit die auf die Bohrlochsohle übertragbaren Schneidkräfte erheblich. Das Verhältnis zwischen Bohrlochquerschnitt und Bohrerquerschnitt kann verkleinert werden, so daß - im Vergleich zum bekannten Verfahren - ein stärkeres und dauerhafteres Bohrwerkzeug möglich ist. Die erfindungsgemäßen Merkmale führen gemeinsam dazu, daß das Potential des Werkstoffs Hartmetall voll ausgeschöpft wird. Gemäß Patentanspruch 2 kann die Führung des Bohrwerkzeugs im Bohrloch durch Führung über die gesamte Bohrlochlänge verbessert werden, wodurch sich eine weitere Vergleichmäßigung des Laufs und damit eine daraus resultierende Verbeserung der Qualität der Bohrung ergibt.

Das erfindungsgemäße Verfahren läßt sich vorteilhaft mit einer Vorrichtung gemäß Patentanspruch 3 verwirklichen, wobei das Schneidteil des Spiralbohrers vorzugsweise gemäß Patentanspruch 4 aus Feinkorn hergestellt ist, um die Standzeit des Bohrwerkzeugs möglichst weit auszudehnen.

Ein geeigneter Anschluß der innerhalb des Schneidteils des Spiralbohrers ausgebildeten Kühlkanäle, der infolge der hohen Anforderungen an den Fluiddruck auf der Bohrlochsohle für das erfindungsgemäße Verfahren außerordentlich wichtig ist, an die Druckfluidleitung der Pumpe läßt sich zuverlässig durch Ausbildung des Spiralbohrers gemäß einem der Patentansprüche 5 bis 26 erreichen.

Die Erfindung wird nunmehr unter Bezugnahme auf die Zeichnung näher erläutert. Es zeigen:

Fig. 1 einen beim erfindungsgemäßen Verfahren anwendbaren Spiralbohrer in Draufsicht im zusammengebauten Zustand;

Fig. 2 das Schneidteil des Spiralbohrers in Draufsicht;

Fig. 3 das Schneidteil im Querschnitt;

Fig. 4 das Schaftteil im Axialschnitt;

Fig. 5 eine Darstellung des Schnitts V-V in Fig. 1;

Fig. 6 eine Explosionsdarstellung des Spiralbohrers in einer zweiten Ausführungsform;

Fig. 7 einen Axialschnitt eines Ausführungsbeispiels des Schaftteils der zweiten Ausführungsform des Spiralbohrers;

Fig. 8 einen Axialschnitt eines weiteren Ausführungsbeispiels des Schaftteils der zweiten Ausführungsform des Spiralbohrers;

Fig. 9 einen Axialschnitt durch den den Endabschnitt des Schneidteils aufnehmenden Abschnitt eines dritten Ausführungsbeispiels des Schaftteils der zweiten Ausführungsform des Spiralbohrers;

Fig. 10 eine Darstellung der Verbindung zwischen Schaft- und Schneidteil des Spiralbohrers;

Fig. 11 eine Vorderansicht des in Fig. 10 gezeigten Kühlkanalübergangselements;

Fig. 12 eine Fig. 10 entsprechende Darstellung einer anderen Verbindung;

Fig. 13 eine Fig. 11 entsprechende Darstellung des in Fig. 12 gezeigten Kühlkanalübergangselements;

Fig. 14 eine Fig. 10 entsprechende Darstellung einer weiteren Verbindung;

Fig. 15 eine Fig. 11 entsprechende Darstellung des in Fig. 14 gezeigten Kühlkanalübergangselements;

Fig. 16 eine Darstellung einer radialen Kanalquerverbindung;

Fig. 17 eine Darstellung einer anders gestalteten Kanalquerverbindung;

Fig. 18 eine Darstellung der Verbindungsstelle zwischen Schneid- und Schaftteil, wobei beide den gleichen Durchmesser haben;

Fig. 19 eine Ansicht des Schaftteils einer vierten Ausführungsform des Spiralbohrers;

Fig. 20 einen Schnitt A-A aus Fig. 19, wobei zusätzlich der Endabschnitt des Schneidteils dargestellt ist;

Fig. 21 einen Schnitt B-B aus Fig. 20;

Fig. 22 eine Ansicht des Schaftteils einer fünften Ausführungsform des Spiralbohrers;

Fig. 23 einen Schnitt A-A aus Fig. 22, wobei zusätzlich der Endabschnitt des Schneidteils dargestellt ist;

Fig. 24 eine Explosionsdarstellung des Übergangsbereichs des Spiralbohrers aus Fig. 22 und 23;

Fig. 25 eine Explosionsdarstellung eines Übergangsbereichs des Spiralbohrers, bei dem zwei Anschlußkanalabschnitte vorgesehen sind; und

Fig. 26 eine Prinzipdarstellung des erfindungsgemäßen Verfahrens, teilweise im Schnitt.

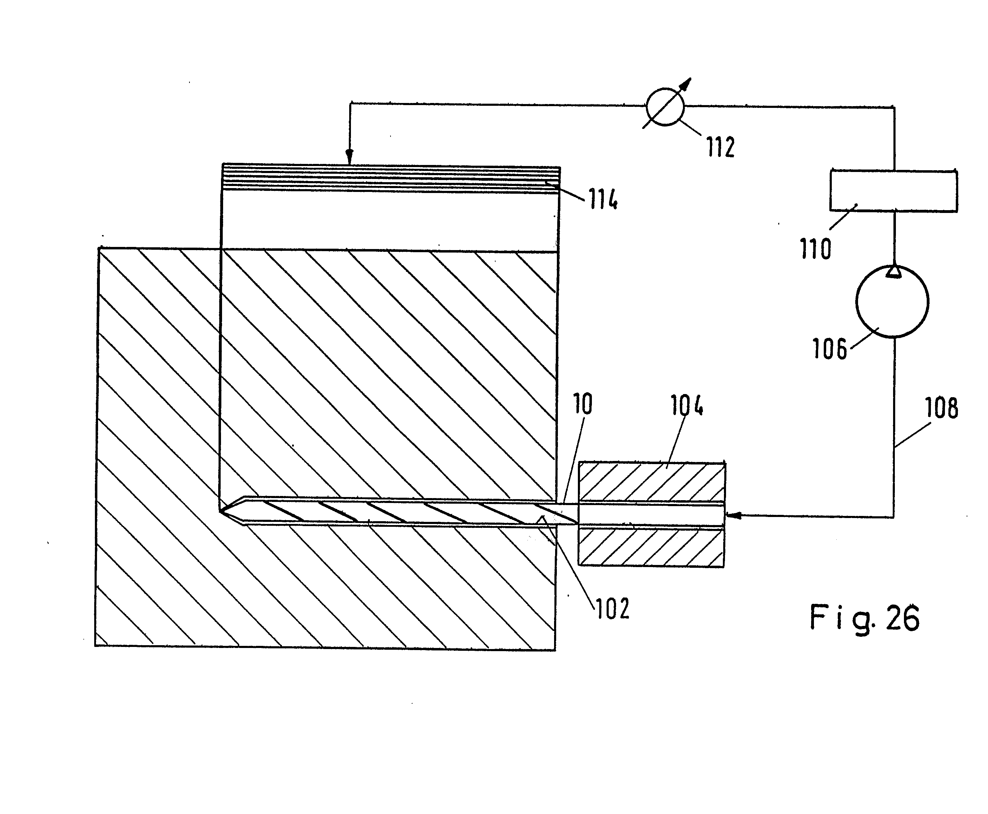

Ein in Fig. 26 im Schnitt dargestelltes Werkstück 100 soll mittels eines Spiralbohrers 10 mit einer Bohrung 102 versehen werden. Der Spiralbohrer 10 wird durch die lediglich schematisch dargestellte Bohrmaschine 104 gehalten und gedreht. Statt den Spiralbohrer 10 mit einer Rotationsbewegung zu beaufschlagen, ist es auch möglich, das Werkstück 100 zu drehen und den Spiralbohrer 10 festzuhalten. Auch können beide Teile jeweils gegensinnig zueinander gedreht werden. Außerdem muß eines der beiden Elemente zusätzlich in bezug auf das andere mit einer Vorschubbewegung beaufschlagt werden.

Im Falle der dargestellten Ausführungsform wird der Spiralbohrer 10 sowohl mit einer Rotationsbewegung als auch mit einer Vorschubbewegung beaufschlagt.

Die Bohrmaschine 104 und durch sie im Spiralbohrer 10 ausgebildete Kühlkanäle sind an eine durch eine Fluidpumpe 106 druckbeaufschlagte Fluidleitung 108 angeschlossen. Durch die Kühlkanäle wird der Fluiddruck auf die Bohrlochsohle übertragen. Der von der Fluidpumpe aufgebaute Fluiddruck wird in seinem Druckniveau derart gesteuert, daß auf der Bohrlochsohle immer ein Druck herrscht, der zumindest 50 bar beträgt. Um diese Mindestdruckhöhe unabhängig von der bereits abgebohrten Bohrlochlänge aufrecht erhalten zu können, wird die Leistung der Fluidpumpe 106 mit zunehmender Bohrlochlänge stetig gesteigert, und zwar in einem Ausmaß, mit dem der zusätzliche Aufwand für den Abtransport und den Austrag des Bohrkleins zumindest ausgeglichen wird. Diese Steuerung erfolgt über eine Steuervorrichtung 110, der im Falle der dargestellten Ausführungsform des Verfahrens als Eingangssignal der von einem Abgreifer abgegriffene elektrische Teilwiderstand eingegeben wird, wobei der Abgreifer von einem ohmschen Widerstand 114 mit Zunahme der Bohrlochtiefe abnehmende Teilwiderstände abgreift.

Jede andere Steuervorrichtung 110, bei der der Fluiddruck der Fluidpumpe entsprechend der Zunahme der Bohrlochtiefe ansteigt, ist ebenfalls anwendbar.

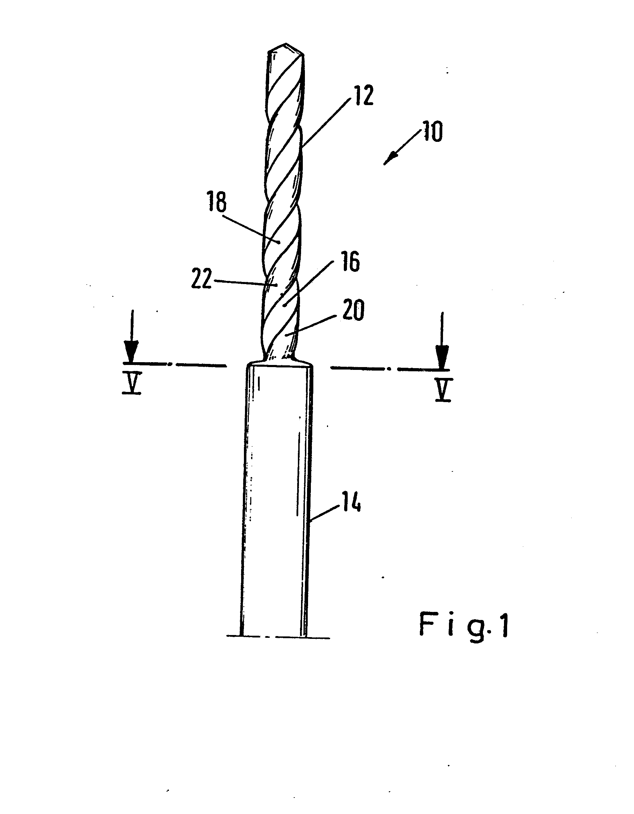

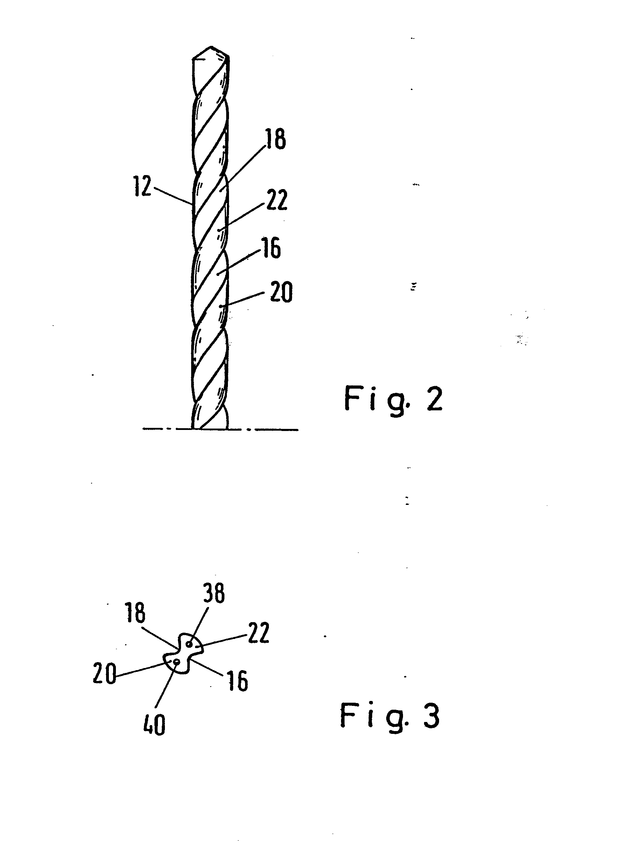

Der in den Figuren 1 bis 4 dargestellte Spiralbohrer 10 gliedert sich im wesentlichen in zwei Abschnitte, nämlich ein Schneidteil 12 und ein Schaftteil 14.

Das Schneidteil 12 ist vollständig aus Hartmetall hergestellt und bei der dargestellten Ausführungsform mit zwei Spannuten 16, 18 versehen, die sich auf der Mantelfläche des Schneidteils 12 um 180° versetzt gegenüberliegen und einen Spanraum ausfüllen, durch den das Bohrklein aus dem Bohrlochtiefsten abgefördert wird.

Die Spannuten 16, 18 schließen zwei Bohrerstege 20, 22 ein, in denen jeweils radial auswärts des Bohrerkerns ein Kühlkanal 38, 40 verläuft. Die Außenflächen der Bohrerstege 20, 22 haben Fasen, durch die ddas Schneidteil 12 des Spiralbohrers 10 innerhalb eines Bohrlochs geführt bzw. zentriert wird.

Zur Kraftübertragung auf das Schneidteil 12 dient das Schaftteil 14, das mit einer Ausgangswelle der Bohrmaschine drehfest verbindbar ist.

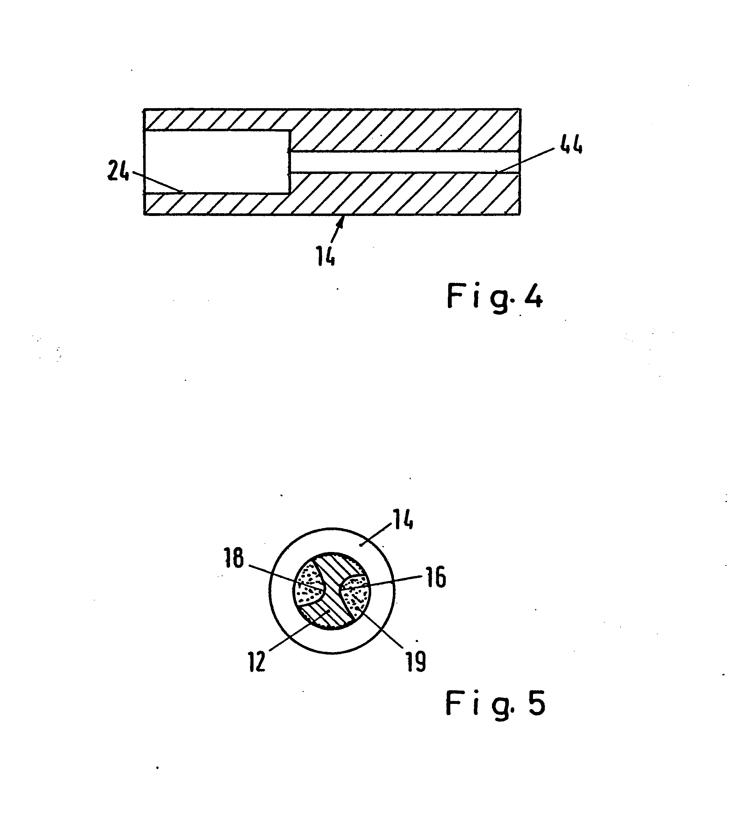

Zur Verbindung de Schneidteils 12 mit dem Schaftteil 14 ist das letztere mit einer Ausnehmung 24 ausgestaltet, deren Innendurchmesser etwa mit dem Außendurchmesser des Schneidteils 12 übereinstimmt. Im Bereich der Öffnungsfläche der Ausnehmung 24 ist die Mantelfläche des Schneidteils 12 mit der Innenwandung der Ausnehmung 24 im Schaftteil 14 verbunden, wie in Figur 5 dargestellt. Hierbei sind die Fasen mit der Innenwand der Ausnehmung 24 verlötet und in die Spannuten ist nahe der Öffnungsfläche Klebstoff 19 eingebracht. Diese Klebverbindung dient dazu, über die gesamte Standzeit des Spiralbohrers 10 die durch die Spannuten 16, 18 gebildeten Hohlräume im Bereich der Öffnungsfläche auszufüllen, um ein Einlaufen von Spänen in die Ausnehmung 24 des Schaftteils 14 zu verhindern.

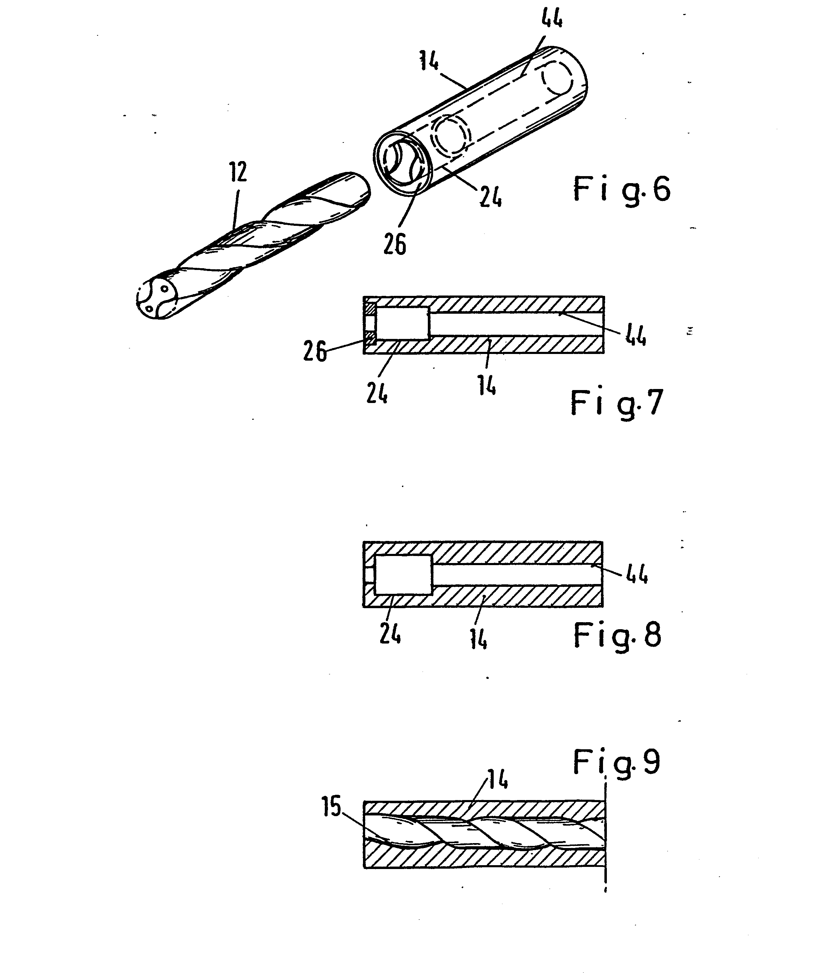

Bei einer zweiten Ausführungsform der Erfindung, die in Figur 6 dargestellt ist, ist die Öffnungsfläche der Ausnehmung 24 mittels einer Trennplatte 26 verschlossen. Die Trennplatte 26 ist mit einer Aussparung ausgebildet, die in ihrem Querschnitt dem des Schneidteils 12 entspricht. Das Schneidteil 12 wird mit seinem der Bohrerspitze abgewandten Endabschnitt durch die Trennplatte 26 mit einer entsprechenden durch den Formschluß zwischen Schneidteil 12 und Trennplatte 26 erzwungenen Rotationsbewegung axial in die Ausnehmung 24 hineingeschoben, bis es mit seinem Ende gegen den Grund der Ausnehmung 24 stößt. Bei dieser Ausführungsform wird die Antriebsenergie vom Schaftteil 14 im wesentlichen mittels des Form- und Kraftschlusses zwischen der fest mit dem Schaftteil 14 verbundenen Trenn-

8

platte 26 und dem Schneidteil 12 weitergeleitet. Die Lötverbindung zwischen den entsprechenden, noch zu beschreibenden, im Grund der Ausnehmung 24 aneinanderliegenden Passungsflächen verhindert den Austritt von Kühlmedium in den Spanraum. Die chemische Resistenz dieser Lötverbindung muß ausreichen, um über die gesamte Standzeit des Schneidteils 12 des Spiralbohrers 10 dem Kühlmedium widerstehen zu können.

Statt wie in Figur 7, die die Trennplatte 26 als separates, mit dem Schaftteil 14 fest verbundenes Element zeigt, kann das Schaftteil 14 auch einstückig mit einem in seinem Querschnitt mit dem der Trennplatte 26 übereinstimmenden, radial nach innen vorstehenden Ringvorsprung 28 ausgebildet sein, wie im Längsschnitt in Figur 8 dargestellt.

Figur 9 zeigt das Schaftteil 14 des Spiralbohrers 10, welches mit einem entsprechend der Gestalt des Schneidteils ausgebildeten Innengewindeabschnitt 15 versehen ist, so daß die gesamte axiale Überlappungslänge zwischen Schneid- 12 und Schaftteil 14 zur gleichmäßigen Übertragung der Antriebsleistung nutzbar ist.

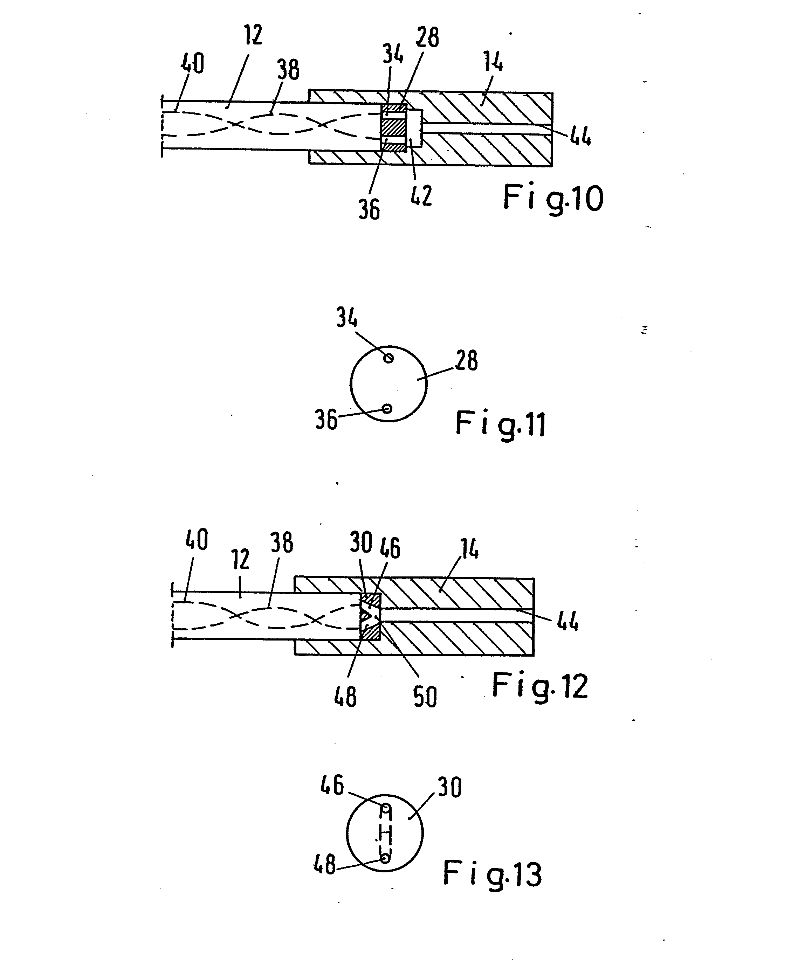

Die Figuren 10 bis 15 zeigen Ausführungsbeispiele für den Anschluß zwischen den Kühlkanälen 38, 40 des Schneidteils 12 an den Kühlkanal 44 des Schaftteils 14 sowie für die Abdichtung dieser Verbindungen. Zwischen der der Bohrerspitze abgewandten Stirnseite des Schneidteils 12 und dem Grund der Ausnehmung 24 im Schaftteil 14 ist jeweils ein Kühlkanalübergangselement 28, 30, 32 angeordnet. Dieses Kühlkanalübergangselement 28, 30, 32 ist fluiddicht sowohl mit dem Schaftteil 14 als auch mit dem Schneidteil 12 verbunden. Daher entfallen weitere Maßnahmen zur Abdichtung zwischen Kühlkanälen und Spanraum. Da die zur Kraftübertragung dienenden Verbindungsflächen zwischen Schaft- 14 und Schneidteil 12 dem Kühlmedium nicht ausgesetzt sind, können sie entsprechend wenig aufwendig ausgeführt werden, bzw. - bei Übertragung des Drehmoments durch Form- bzw. Kraftschluß - unter bestimmten Voraussetzungen sogar entfallen.

Das in Figur 10 und 11 dargestellte Kühlkanalübergangselement 28 weist zwei separate Kühlkanalabschnitte 34, 36 auf, die zueinander parallel und in Axialrichtung des Spiralbohrers 10 verlaufen und somit die Kühlkanäle 38, 40 des Schneidteils 12 separat mit einer Erweiterung 42 des Endes des Kühlkanals 44 im Schaftteil 14 verbinden.

Das in den Figuren 12 und 13 gezeigte Kühlkanalübergangselement 30 hat zwei gegeneinander geneigte Kühlkanalabschnitte 46, 48, die jeweils von einem gemeinsamen Anschluß 50 an den Kühlkanal 44 des Schaftteils 14 zu den Öffnungsflächen der Kühlkanäle 38, 40 des Schneidteils 12 verlaufen.

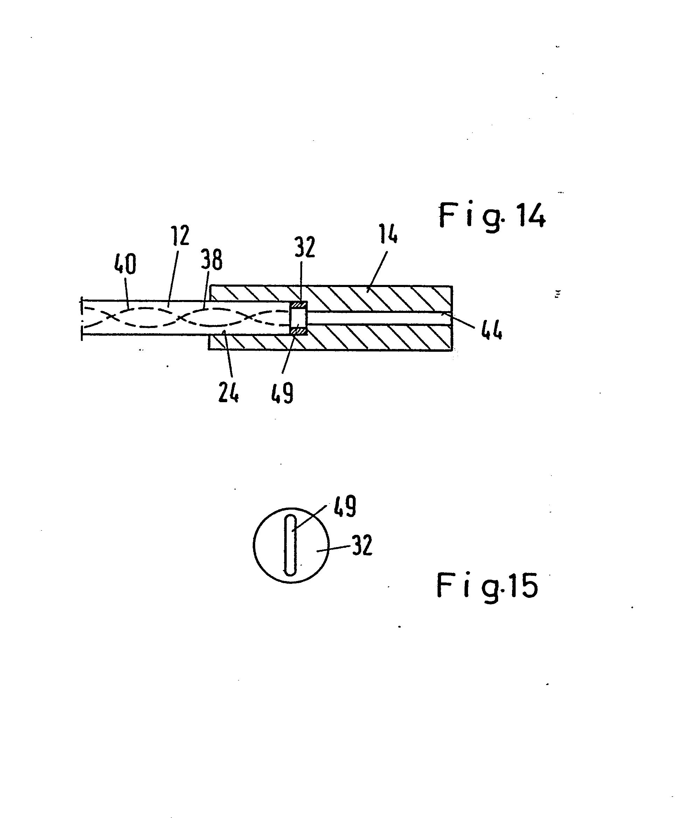

Die Figuren 14 und 15 zeigen ein Kühlkanalübergangselement 32 mit einem Schlitz 49, durch den der gesamte Mittelabschnitt der in der Ausnehmung 24 befindlichen Stirnseite des Schneidteils 12 und damit beide Öffnungsflächen der Kühlkanäle 38, 40 des Schneidteils 12 an den Kühlkanal 44 des Schaftteils 14 angeschlossen sind.

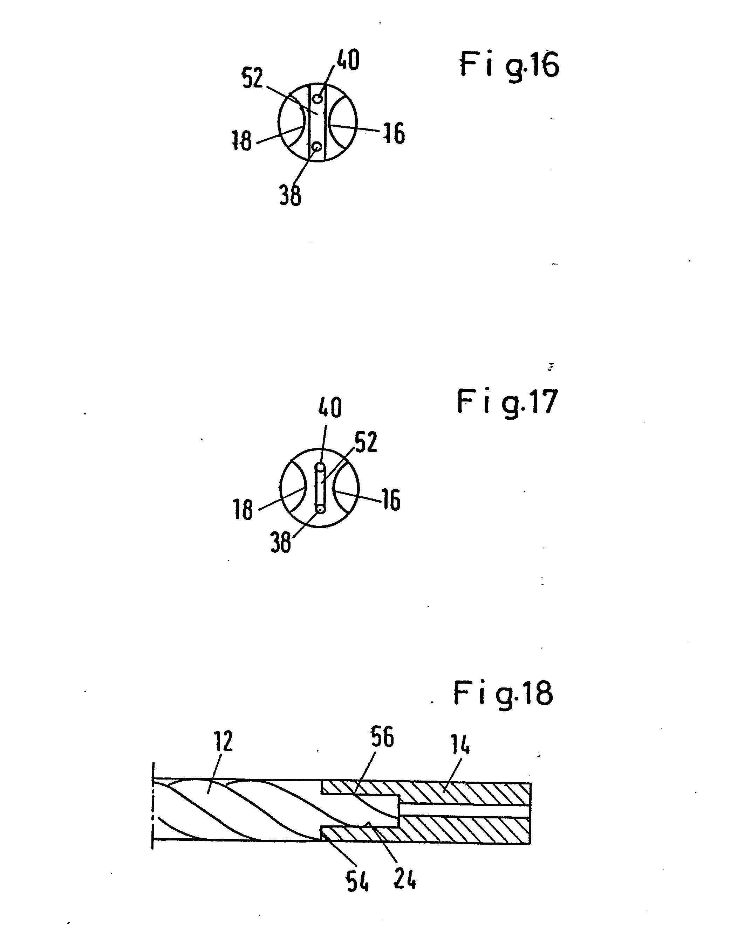

Für den Fall, daß das Kühlkanalübergangselement lediglich eine Öffnung aufweist, die die beiden Öffnungen der im Schneidteil 12 ausgebildeten Kühlkanäle 38, 40 nicht überdeckt, ist in der entsprechenden Stirnfläche 13 des Schneidteils 12 eine nutförmige Vertiefung als Kanalquerverbindung 52 ausgebildet, die sich gemäß Figur 16 über den gesamten Durchmesser des Schneidteils 12 erstreckt oder gemäß Figur 17 nur in dessen Mittelabschnitt ausgestaltet ist.

Bei einem Schneidteildurchmesser, der etwa dem des Schaftteils 14 entspricht, wird zur Verbindung beider Teile am der Bohrerspitze abgewandten Endabschnitt des Schneidteils 12 mittels einer radialen Abstufung 54 ein Montageabschnitt 56 ausgebildet, dessen Außendurchmesser dem Innendurchmesser der im Schaftteil 14 ausgebildeten Ausnehmung 24 entspricht. Eine derartige Ausführungsform ist in Figur 18 dargestellt.

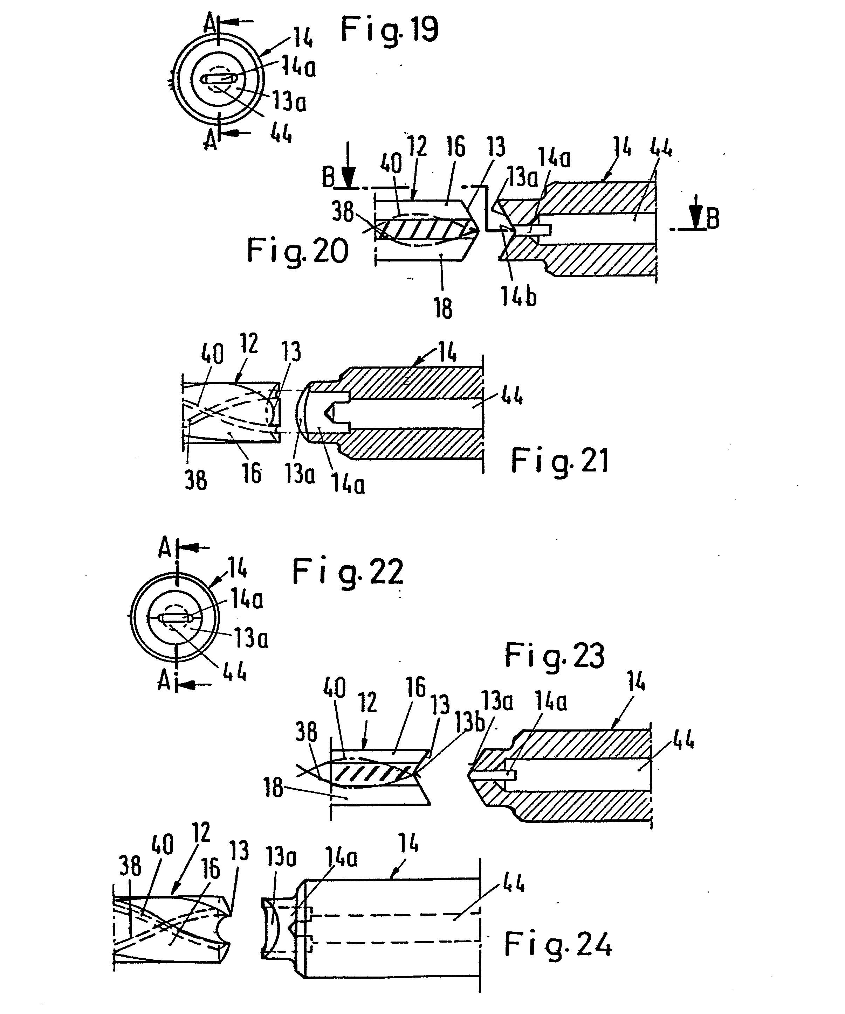

Das in Fig. 19 bis 21 gezeigte Schaftteil 14 ist am Übergangsabschnitt mit einer Stirnfläche 13a versehen, die mit einer hohlkeilartigen Ausnehmung 14b ausgestaltet ist. Die beiden, die Ausnehmung 14b ausbildenden ebenen Flächen schneiden sich in der Mitte einer Schlitzausnehmung 14a, die die Öffnungen, die die Kühlkanäle 38, 40 in der Stirnfläche 13 des Schneidteils 12 ausbilden, mit dem zentralen Kühlkanal 44 des Schaftteils 14 verbindet. Die Stirnflächen 13 und 13a sind untereinander verlötet, so daß ein Austritt von Kühlmittel in den durch die Spannuten 16, 18 gebildeten Spanraum ausgeschlossen ist. Eine wirksame Drehmomentübertragung wird durch den in Umfangsrichtung des Spiralbohrers bewirkten Formschluß gewährleistet, mit dem die prismenförmig gestaltete Spitze des Endabschnitts des Schneidteils 12 in die Ausnehmung 14b im Schaftteil 14 eingreift.

In den Fig. 22 bis 24 ist ein dem zuletzt geschilderten ähnlicher Spiralbohrer gezeigt, wobei hier an die Stelle der prismenförmigen Spitze des Schneidteils 12 die des Schaftteils 14 tritt an die der hohlkeilförmigen Ausnehmung 14b des Schaftteils 14 die Ausnehmung 13b des Schneidteils 12. Die Funktion und die Wirkung entspricht der vorher geschilderten.

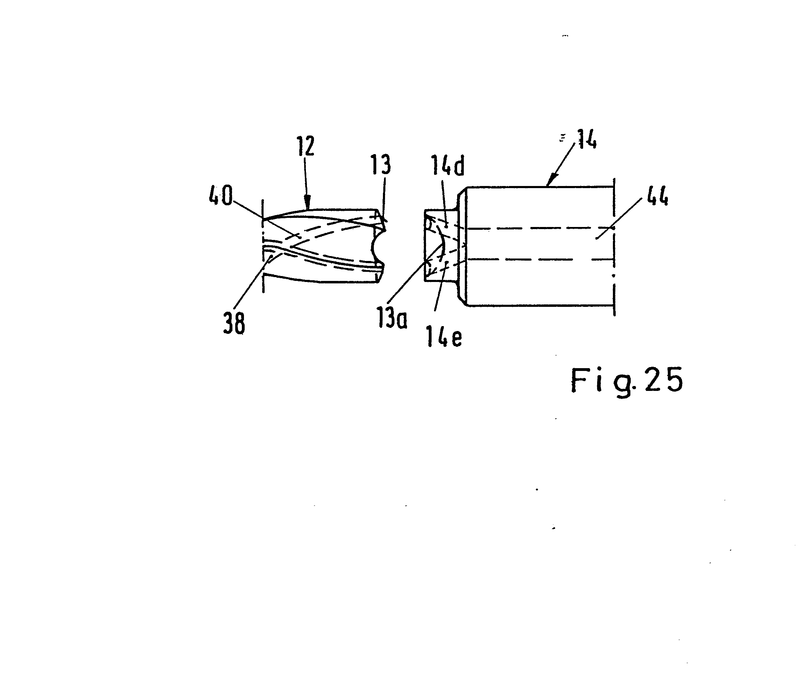

Fig. 25 zeigt eine alternive Anschlußmöglichkeit für die Kühlkanäle 38, 40 eines den in den Fig. 19 bis 24 dargestellten ähnlichen Spiralbohrers. Hierbei sind im Übergangsbereich zwischen dem Schaft- 14 und dem Schneidteil 12 statt der Schlitzausnehmung 14a Anschlußkänalabschnitte 14d, 14e ausgebildet, die jeden Kühlkanal 38, 40 einzeln mit dem Kühlkanal 44 des Schaftteils 14 verbinden.

# Tiedtke - Bühling - Kinne - Grupe
## Pellmann - Grams - Struif

Patentanwälte und
Vertreter 0245604

Dipl.-Ing. H. Tiedtke
Dipl.-Chem. G. Bühling
Dipl.-Ing. R. Kinne
Dipl.-Ing. P. Grupe
Dipl.-Ing. B. Pellmann
Dipl.-Ing. K. Grams
Dipl.-Chem. Dr. B. Struif

Bavariaring 4, Postfach 20 24 03
8000 München 2
Tel.: 0 89 - 53 96 53
Telex: 5-24 845 tipat
Telecopier: 0 89 - 537377
cable: Germaniapatent München

12

12. März 1987
EP 6579

Patentansprüche

1. Verfahren zum Einbringen tiefer Löcher in ein Werkstück mittels eines Bohrwerkzeugs, das im Bereich der Bohrlochsohle mit einem unter einem vorgegebenen Betriebskühlmitteldruck stehenden Kühlmittel versorgt wird, dadurch gekennzeichnet, daß als Bohrwerkzeug ein Spiralbohrer mit einem Hartmetall-Schneidteil mit innenliegenden Kühlkanälen verwendet wird und daß der Betriebskühlmitteldruck in Abhängigkeit von der Bohrlochtiefe in einem Bereich über 50 bar gesteuert wird.

2. Verfahren nach Anspruch 1, dadurch gekennzeichnet, daß der Schaft des Schneidteils des Spiralbohrers in seiner gesamten Länge zur Führung im Bohrloch benutzt wird.

3. Vorrichtung zur Durchführung des Verfahrens nach einem der Ansprüche 1 oder 2, mit einem Bohrwerkzeug und einem Druckversorgungsteil, das für den Hauptschnei-

Dresdner Bank (München) Kto 3935 844          Deutsche Bank (München) Kto. 286 1060          Postscheckamt (München) Kto 678-43-804

denbereich des Bohrwerkzeugs über zumindest einen innenliegenden Kühlkanal Kühlmittel mit einem vorgegebenen Betriebskühlmitteldruck zur Verfügung stellt, dadurch gekennzeichnet, daß das Bohrwerkzeug ein Spiralbohrer mit einem Hartmetall-Schneidteil mit einer der Anzahl der Bohrerstege entsprechenden Zahl innenliegender Kühlkanäle und mit einem Schaftteil ist und daß das Druckversorgungsteil ein Steuerelement aufweist, das das Druckversorgungsteil derart regelt, daß der Betriebskühlmitteldruck an der Bohrlochsohle nicht unter 50 bar fällt.

4. Vorrichtung nach Anspruch 3, dadurch gekennzeichnet, daß das Schneidteil aus Feinkorn mit einem maximalen Korndurchmesser von 1 μm hergestellt ist.

5. Vorrichtung nach Anspruch 3 oder 4, dadurch gekennzeichnet, daß das Schneidteil (12) zumindest zwei wendelförmige, einen Spanraum ausbildende Spannuten (16, 18) aufweist, die sich über seine gesamte Länge erstrecken, und mit seinem der Bohrerspitze abgewandten Endabschnitt mittels an ihm und an dem der Bohrerspitze zugewandten Endabschnitt des Schaftteils (14) entsprechend ausgebildeter Stirnflächen (13, 13a) mit dem Schaftteil (14) verbunden ist, und daß die Kühlkanäle (38, 40, 44) mittels verlöteter Passungsflächen zwischen dem Schneid- (12) und dem Schaftteil (14) gegen den Spanraum abgedichtet sind.

6. Vorrichtung nach Anspruch 5, dadurch gekennzeichnet, daß der der Bohrerspitze abgewandte Endabschnitt des Schneidteils (12) in eine angepaßte Ausnehmung (24) des Schaftteils (14) eingesetzt ist.

7. Vorrichtung nach Anspruch 6 , dadurch gekennzeichnet, daß die Ausnehmung (24) des Schaftteils (14) zylindrisch unter Anpassung an den Außendurchmesser des Schneidteils (12) ausgebildet ist.

8. Vorrichtung nach Anspruch 6 oder 7, dadurch gekennzeichnet, daß die Abdichtung über eine Stirnfläche (13) des Schneidteils (12) erfolgt, die flächig an eine entsprechend geformte Anlagefläche im Grund der Ausnehmung (24) anliegt.

9. Vorrichtung nach Anspruch 8, dadurch gekennzeichnet, daß das Schaftteil (14) einen zentralen Kühlkanal (44) hat, dessen Durchmesser kleiner ist als der Kernquerschnitt des Schneidteils (12) und der beide Kühlkanäle (38, 40) des Schneidteils (12) anschließt, und daß die Anlagefläche vom Grund der Ausnehmung (24) gebildet ist.

10. Vorrichtung nach einem der Ansprüche 6 bis 7 , dadurch gekennzeichnet, daß die Stirnfläche (13) des Schneidteils (12) an einer Anlagefläche eines im Grund der Ausnehmung (24) des Schaftteils (14) angeordneten Kühlkanalübergangselements (28, 30, 32) liegt, durch das eine gerichtete Verzweigung des im Schaftteil (14) vorhandenen Kühlkanals (44) auf die im Schneidteil (12) vorliegenden Kühlkanäle (38, 40) hin erfolgt.

11. Vorrichtung nach Anspruch 10, dadurch gekennzeichnet, daß die Kühlkanalöffnungen auf der Stirnfläche (13) des Schneidteils (12) einzeln an entsprechende Öffnungen des Kühlkanalübergangselements (28, 30, 32) angeschlossen sind.

12. Vorrichtung nach Anspruch 9 oder 10, dadurch gekennzeichnet, daß die Kühlkanäle (38, 40) des Schneidteils (12) mittels einer auf seiner Stirnfläche (13) ausgebildeten radialen Kanalquerverbindung (52) verbunden sind.

13. Vorrichtung nach Anspruch 9 oder 10, dadurch gekennzeichnet, daß das Kühlkanalübergangselement (32) in der Ausnehmung (24) formschlüssig aufgenommen ist und einen Schlitz (49) aufweist, in den die Kühlkanäle (38, 40) des Schneidteils (12) münden.

14. Vorrichtung nach einem der Ansprüche 6 bis 13, dadurch gekennzeichnet, daß zwischen Schneid- (12) und Schaftteil (14) nahe der Öffnungsfläche der Ausnehmung (24) eine Schicht Klebstoff eingebracht ist, die die Spannuten (16, 18) ausfüllt.

15. Vorrichtung nach einem der Ansprüche 6 bis 14, dadurch gekennzeichnet, daß die Ausnehmung (24) mit einem wendelförmigen Innengewindeabschnitt (15) ausgebildet ist, in dem sie einen entsprechenden Abschnitt des Schneidteils (12) formschlüssig aufnimmt.

16. Vorrichtung nach Anspruch 15, dadurch gekennzeichnet, daß sich der Innengewindeabschnitt (15) über die gesamte axiale Länge der Ausnehmung (24) erstreckt.

17. Vorrichtung nach einem der Ansprüche 6 bis 14, dadurch gekennzeichnet, daß die Ausnehmung (24) durch eine Trennplatte (26) geschlossen ist, die in bezug auf die Öffnungsfläche der Ausnehmung (24) den negativen Schneidteilquerschnitt aufweist.

18. Vorrichtung nach Anspruch 17, dadurch gekennzeichnet, daß die Trennplatte (26) einstückig mit dem Schaftteil (14) ausgebildet ist.

19. Vorrichtung nach Anspruch 17, dadurch gekennzeichnet, daß die Trennplatte (26) separat ausgebildet und fest mit dem Schaftteil (14) verbunden ist.

20. Vorrichtung nach Anspruch 5, dadurch gekennzeichnet, daß die aneinander anliegenden Stirnflächen (13 bzw. 13a) des Schneid- (12) bzw. des Schaftteils (14) als Passungsflächen derart jeweils durch einander schneidende Ebenen gebildet sind, daß Schaft- (14) und Schneidteil (12) in Umfangsrichtung formschlüssig verbindbar sind, wobei der Kühlkanal (44) des Schaftteils (14) durch den Endabschnitt des Schaftteils (14) mit den einzelnen Kühlkanälen (38, 40) des Schneidteils (12) verbunden ist.

21. Vorrichtung nach Anspruch 20, dadurch gekennzeichnet, daß die Stirnfläche (13) des Schneidteils (12) prismenartig vorsteht und in eine entsprechend ausgebildete Ausnehmung (14b) in der Stirnfläche (13a) des Schaftteils (14) einragt.

22. Vorrichtung nach Anspruch 20, dadurch gekennzeichnet, daß die Stirnfläche (13a) des Schaftteils (14) prismenartig vorsteht und in eine entsprechend ausgebildete Ausnehmung (13a) in der Stirnfläche (13) des Schneidteils (12) einragt.

23. Vorrichtung nach einem der Ansprüche 20 bis 22, dadurch gekennzeichnet, daß zum Anschluß der Kühlkanäle (38, 40) des Schneidteils (12) an den Kühlkanal (44) des Schaftteils (14) im Endabschnitt des Schaftteils (14) eine Schlitzausnehmung (14a) vorgesehen ist, durch die der Kühlkanal (44) des Schaftteils (14) auf die einzelnen Kühlkanäle (38, 40) des Schneidteils (12) erweitert ist.

24. Vorrichtung nach einem der Ansprüche 20 bis 22, dadurch gekennzeichnet, daß zum Anschluß der Kühlkanäle (38, 40) des Schneidteils (12) an den Kühlkanal (44) des Schaftteils (14) im Endabschnitt des Schaftteils (14) Anschlußkanalabschnitte (14d, 14e) vorgesehen sind, von denen jeder vom Kühlkanal (44) auf einen der Kühlkanäle (38, 40) zuläuft.

25. Vorrichtung nach einem der Ansprüche 15 bis 19, dadurch gekennzeichnet, daß der die Ausnehmung (24) bildende Abschnitt des Schaftteils (14) ein Gußkörper ist.

26. Vorrichtung nach einem der Ansprüche 15 bis 19, dadurch gekennzeichnet, daß das Schaftteil (14) ein Gußkörper ist.

Fig.1

18

12

22

16

20

Fig. 2

38

18

20

22

16

40

Fig. 3

Fig. 4

Fig. 5

Fig. 6

Fig. 7

Fig. 8

Fig. 9

Fig.10

Fig.11

Fig.12

Fig.13

Fig. 14

Fig. 15

Fig.16

Fig.17

Fig.18

Fig. 19

Fig. 20

Fig. 21

Fig. 22

Fig. 23

Fig. 24

Fig. 25

Fig. 26

0245604